# EUROPÄISCHE PATENTANMELDUNG

(11) **EP 0 613 092 A1**
(43) Veröffentlichungstag der Anmeldung: **31.08.1994**
(21) Anmeldenummer: 94102913.4
(22) Anmeldetag: 25.02.1994
(51) Int. Cl.: G06F 15/02, G06F 1/16

(54) **Tragbares elektronisches Gerät zur Orientierung und Kommunikation**

(30) Priorität: 05.10.1993 DE 9315094 U; 25.02.1993 DE 4305857
(71) Anmelder: IBP Pietzsch GmbH, D-76275 Ettlingen (DE)
(72) Erfinder: Wiemer, Karl-Heinz, Dr., D-76275 Ettlingen (DE); Kobbelt, Thorsten, D-76139 Karlsruhe (DE); Göbel, Ewald, D-76228 Karlsruhe (DE)
(74) Vertreter: Liesegang, Roland, Dr.-Ing.

(57) **Zusammenfassung**

Ein tragbares elektronisches Gerät zur Orientierung und Kommunikation weist ein Gehäuse 2 auf, welches einen tragbaren Rechner 8 mit integrierter Bedienoberfläche 10, Kommunikationseinrichtungen umfassend elektronische Baugruppen zur drahtlosen Kommunikation mit gleichen oder ähnlichen Geräten und eine Andockstation 6 zur elektrischen Verbindung des Rechners mit den Kommunikationseinrichtungen und den elektronischen Baugruppen sowie zur mechanischen Halterung hat. Dabei sind der Rechner 8 und die elektronischen Baugruppen geschützt gegen äußere Einflüsse in dem Gehäuse untergebracht, und der Rechner ist aus dem Gehäuse herausnehmbar zum Betreiben unabhängig von dem Gerät ausgebildet.

## Beschreibung

Die Erfindung betrifft ein tragbares elektronisches Gerät zur Orientierung, Informationsaufnahme, Informationsverarbeitung, Informationsspeicherung und Kommunikation. Solche Geräte sind beispielsweise zur Führung und Einsatzunterstützung von Personengruppen, wie eines Katastrophenschutzverbandes oder eines Truppenverbandes im Gelände gedacht.

Solche Führungsunterstützungsgeräte sind zur festen Installation in Fahrzeuge von Fahrzeugverbänden vorgeschlagen worden (EP-A-567 660).

Es besteht das Bedürfnis, auch von Fahrzeugen unabhängig operierende Personen oder Personengruppen, beispielsweise eines Truppenverbandes oder eines Katastrophenschutzverbandes, mit derartigen Geräten auszurüsten, um die Orientierung, die Informationsaufnahme und den Informationsaustausch zwischen der Führung und den davon geführten Personen des Verbandes sowie zwischen diesen Personen selbst zu beschleunigen und zu verbessern.

Aus der DE 38 17 620 A1 ist ein Meßgerät zum Vermessen von Objekten bekannt, bei dem ein Kleinrechner zum Schutz vor Umwelteinflüssen wie Feuchtigkeit oder Schmutz in einem Gehäuse auswechselbar untergebracht ist.

Es ist ferner ein tragbares elektronisches Gerät in Form eines Koffers bekannt (DE 88 01 332 U1), in dessen einer Hälfte ein Mikrorechner mit Bedien- und Anzeigeteil und in dessen anderer Hälfte ein Drucker und eine Datenübertragungseinrichtung fest untergebracht sind. Zur Kommunikation mit einem ortsfesten Großrechner ist eine Verbindung über ein Netz herzustellen.

Es ist Aufgabe der Erfindung, ein tragbares, von Einzelpersonen einer Gruppe oder eines Verbandes handhabbares Gerät zu schaffen, welches der Person oder Gruppe eine schnelle Orientierung im Gelände, die schnelle Information über Art, Ort, Bewegung und Umfang einer Bedrohung sowie einen Informationsaustausch, z.B. zum Austausch von logistischen Informationen entsprechend der Funktionstastentabelle gemäß Figur 11, mit anderen Personen der Gruppe oder des Verbandes und/oder mit einer Führungsstelle für den Verband mit oder ohne Benutzung eines Stromnetzes erlaubt, wobei der Rechner und sonstige elektronische Baugruppen des Gerätes gegen elektromagnetische Strahlung aller Art, sowie gegen Eindringen von Feuchtigkeit, Staub und Schmutz wirksam geschützt sein sollen.

Zur Lösung dieser Aufgabe dient Anspruch 1.

Der Rechner kann in Form einer fest im Gerät installierten Rechnerplatine vorgesehen sein. Er kann auch aus dem Gerät herausnehmbar und davon unabhängig betreibbar sein. Schließlich kann der Rechner als sogenannter Note-Pad-Rechner ausgebildet und außen an der Andockstation wegnehmbar angedockt sein, wobei die Orientierungssensoren im Gegensatz zu den beiden vorgenannten Möglichkeiten nicht im Gehäuse integriert sind.

Allen Ausführungen gemeinsam ist ein Terminal-Node-Conroller, der die Umschaltung zwischen Daten- und Sprachübermittlung,-sei es über Funk oder über ein internes oder amtliches Netz -, steuert.

Ein wichtiger Vorteil eines Geräts nach der Erfindung ist, daß ein im Handel erhältlicher Rechner (oder eine Rechnerplatine) in dem von einer Person leicht transportierbaren Gerät einsetzbar ist, der aufgrund der großen Stückzahlen solcher Rechner (Laptop-, Notebook-, Note-Pad-Rechner) billig erhältlich ist und aufgrund der Austauschbarkeit des Rechners erlaubt, stets die leistungsfähigste Version eines solchen Rechners einzusetzen und damit den neuesten Stand der Rechnertechnologie ohne übermäßigen Kostenaufwand zu nutzen.

Darüberhinaus ermöglicht der modulare Aufbau des Gerätes, den vorzugsweise vom Gehäuse abtrennbaren Rechner unabhängig vom Gerät zu betreiben, beispielsweise in geschützter Umgebung in einem Leitstand.

Bei einer Ausführung der Erfindung mit gesondertem, permanent im Gehäuse untergebrachten Bedien- und Anzeigemodul ist dieser für den Betrieb in rauher Umgebung bei geöffneter Deckelschale des Koffers ausgelegt. Hierzu ist lediglich die Deckelschale des Gerätes zu öffnen, so daß der Rechner, der über eine eigene Bedien- und/oder Bildschirmoberfläche verfügt, in der unteren Schale vollkommen verschlossen und geschützt bleibt.

Der tragbare Rechner ist vorteilhaft auch als Zentraleinheit in einem Fahrzeug verwendbar, wozu er lediglich aus dem Gerät herauszunehmen und an eine fahrzeugfeste Andockstation über eine elektrisch-mechanische Schnittstelle anzusetzen ist.

Weitere vorteilhafte Ausgestaltungen der Erfindung sind in den Unteransprüchen angegeben.

Die Erfindung ist im folgenden anhand schematischer Zeichnungen an Ausführungsbeispielen mit weiteren Einzelheiten näher erläutert. Es zeigen:
- Fig. 1: in einer Explosionsdarstellung die Teile eines tragbaren elektronischen Gerätes gemäß der Erfindung in einer ersten Ausführung;
- Fig. 2: eine Schnittansicht eines tragbaren Gerätes nach der Erfindung in einer zweiten Ausführung,
- Fig. 3: in einem Schnitt nach der Linie III-III in Fig. 2 und das Gerät in aufgeklapptem Betriebszustand
- Fig. 4: in einer Schemadarstellung die Überführung eines Rechners des tragbaren Gerätes in eine fahrzeugfeste Anordnung,
- Fig. 5 und 6: eine Variante mit lösbar am Gerät angeordnetem Gehäuseabschnitt zur Aufnahme von zusätzlichen Komponenten,
- Fig. 7: eine perspektivische Darstellung einer weiteren Ausführung eines Gerätes gemäß der Erfindung in aufgeklapptem Zustand;
- Fig. 8: einen Teilschnitt durch das Gerät in Richtung der Pfeile II-II in Fig. 7;
- Fig. 9: einen anderen Teilschnitt in Richtung der Pfeile III-III in Fig. 7;
- Fig. 10: ein Schaltschema der Komponenten des Gerätes nach den Figuren 7 bis 9;
- Fig. 11: ein Beispiel für die Kennzeichnung von Funktionstasten eines Rechners des Gerätes nach der Erfindung;
- Fig. 12: eine Schemadarstellung einer weiteren Ausgestaltung eines Gerätes gemäß der Erfindung;
- Fig. 13: einen Schnitt nach der Linie XIII-XIII in Fig. 12;
- Fig. 14: ein Blockschaltbild zur Erläuterung der Funktion des Gerätes nach den Figuren 12 und 13;
- Fig. 15: eine perspektivische Ansicht einer vereinfachten Ausführung eines Gerätes gemäß der Erfindung;
- Fig. 16: ein Schaltbild, welches den Aufbau einer Baugruppe des Schaltschemas nach Fig. 10 detailliert zeigt.

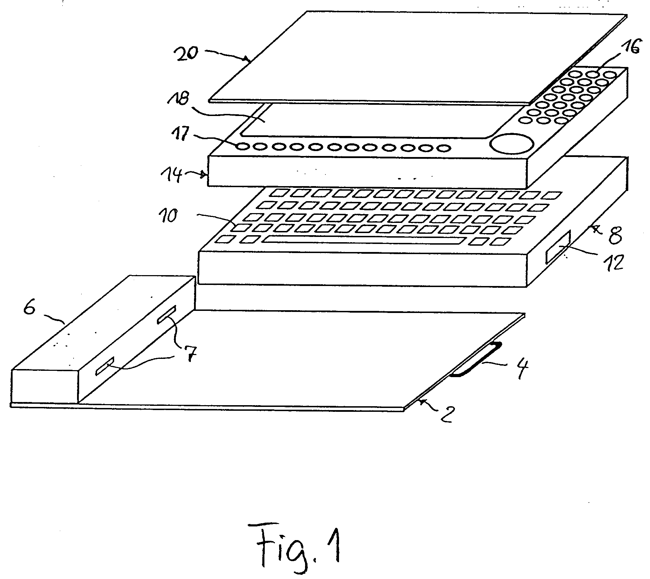

Die Darstellung nach Fig. 1 zeigt die Bestandteile eines tragbaren Gerätes nach der Erfindung schematisch, nämlich eine Grundplatte 2 mit Griff 4 und Andockstation 6, einem Rechner 8 mit integrierter Bedienoberfläche (Tastatur) 10 und Schreib-/Leseeinheit mit Schlitz 12 zum Einstecken von Halbleiterspeicherkarten sowie gegebenenfalls eigenem Bildschirm (hier nicht realisiert), ein Bedien- und Anzeigemodul 14 mit Tastenfeld 16, 17 und Bildschirm 18 sowie Deckel 20.

Rechner 8 und Bedien- und Anzeigemodul 14 sind mit der Andockstation 6 durch bei 7 für den Rechner angedeutete Steckverbindungen elektrisch und mechanisch verbindbar. Diese Andockstation 6 enthält eine Batterie, einen Funkadapter, ein satellitgestütztes Navigationsgerät (GPS) und eventuell einen digitalen Kompaß (nicht gezeigt).

Der Rechner 8 enthält einen Speicher, in dem beispielsweise eine elektronische Landkarte gespeichert ist, die auf dem Bildschirm 18 zusammen mit Symbolen für den eigenen Standort sowie die (sich verändernden) Standorte naher Verbandsmitglieder oder feindlicher Kräfte darstellbar sind.

Der Bedien- und Anzeigemodul ist für rauhen Betrieb konzipiert, so daß er im Betrieb mit abgenommenem oder aufgeklappten Deckel 20 keinen Schaden durch Witterungseinflüsse, Verschmutzung oder dergleichen erleidet. Bei solchem Betrieb deckt der Bedien- und Anzeigemodul 14 den Rechner 8 ab, so daß dieser im Gerät allseitig geschützt ist.

Es ist ersichtlich, daß die Baugruppen des Gerätes nach Fig. 1 modular und einzeln austauschbar konzipiert sind.

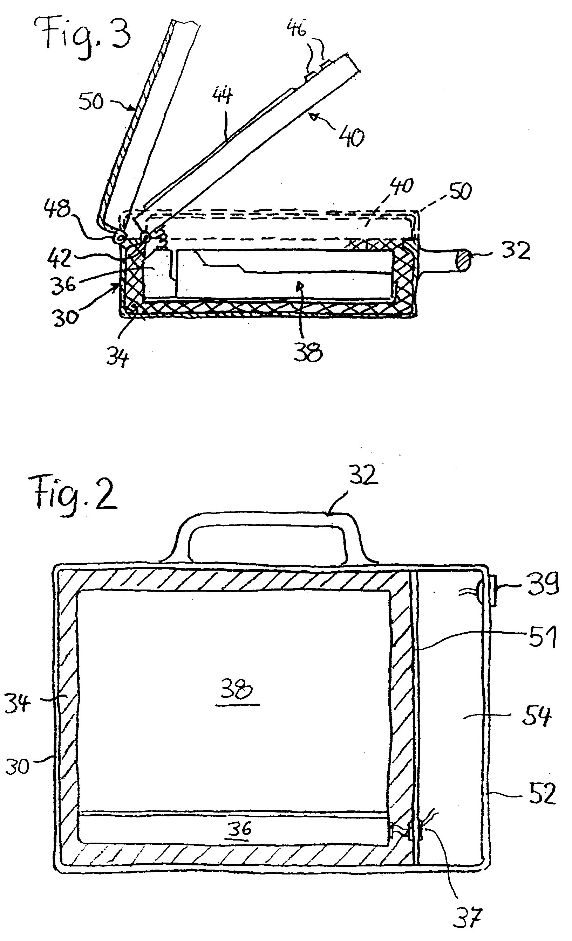

Bei der Ausführung nach den Fig. 2 und 3 ist das Gerät als Koffer mit einer Unterschale 30 mit Griff 32 ausgebildet. Die Unterschale ist durch ein Schockdämpfmaterial 34, z.B. einen geschäumten Kunststoff, ausgekleidet, in welchem eine Andockstation 36 und ein "Notebook"-Rechner 38 geschützt aufgenommen sind. Ein Bedien-und Anzeigemodul 40 ist über ein Scharnier 42 oberhalb der Aufnahmeöffnung der Unterschale 30 so angelenkt, daß er in heruntergeklapptem Zustand (in Fig. 3 gestrichelt dargestellt) die Öffnung abdeckt und damit den Rechner 38 sowie die Andockstation 36 vollständig einschließt und vor äußeren Einflüssen schützt. Der Bedien- und Anzeigemodul 40 weist auf seiner Oberseite einen Bildschirm 44 und eine Eingabetastatur 46 auf. An der oberen Außenkante der unteren Schale 30 ist über ein Scharnier 48 eine Deckelschale 50 so angelenkt, daß sie in geschlossenem Zustand (gestrichelt in Fig. 3 dargestellt) den Bedien- und Anzeigemodul 40 vollständig abdeckt.

In diesem Fall ist eine Schreib-/Leseeinheit mit Schlitz zum Einstecken von Halbleiterspeicherkarten im Bedien- und Anzeigemodul 40 angeordnet (hier nicht dargestellt).

Der Rechner 38 ist vorzugsweise ein kommerziell erhältlicher, komfortabler Laptop- oder Notebook-Rechner, der aus dem Gerät herausnehmbar ist und so autonom in einer geschützten Umgebung, z.B. einem Führungsunterstand, einer Stabsstelle oder dergleichen einsetzbar ist. So kann dieser Rechner 38 jeweils durch den leistungsfähigsten oder durch einen an die erforderliche Leistung angepaßten Rechner ersetzt werden.

Fig. 2 läßt erkennen, daß die Andockstation 36 in diesem Fall lediglich zur Herstellung der mechanischen und elektrischen Verbindung zwischen dem Rechner 38 und dem Bedien- und Anzeigemodul 40 dient. Zusätzliche Komponenten wie Funkadapter, Satelliten-Navigationsgerät, digitaler Kompaß, Schreib-/Leseeinheit für Halbleiterspeicherkarten etc. sind in einem durch eine Trennwand 51 abgeteilten seitlichen Raum 54 des Koffers in einem eigenen Gehäuseabschnitt 52 untergebracht und über einen elektrischen Anschluß 37 in der Trennwand mit der Andockstation 36 verbindbar. Von dem Raum 54 kann ein weiterer elektrischer Steckanschluß 39 nach außen geführt sein, um zum Beispiel über ein kurzes Kabel ein weiteres gleichartiges Gerät anschließen zu können.

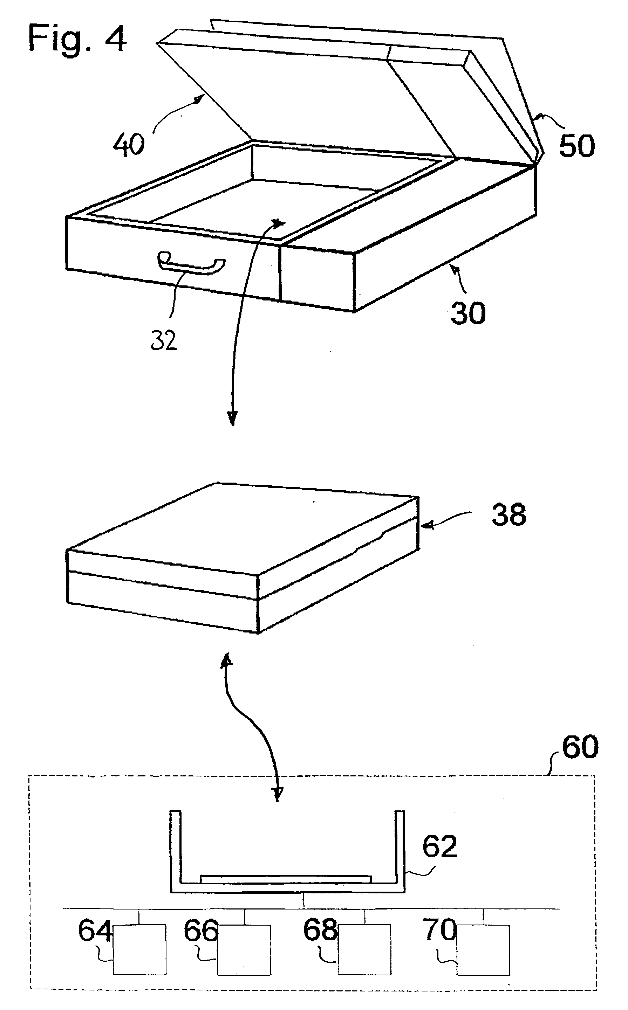

Fig. 4 zeigt oben das Gerät gemäß Fig. 3 mit geöffneter Deckelschale 50 und hochgeklapptem Bedien- und Anzeigemodul 40 zur Herausnahme des darunter getrennt dargestellten Rechners 38. Dieser ist in eine fest in einem Fahrzeug 60 installierte elektrisch-mechanische Schnittstelle 62 einsetzbar und kann dann als Zentraleinheit einer Anordnung im Fahrzeug zur Informationsaufnahme, -verarbeitung, -speicherung und -abgabe dienen, wobei diese fahrzeugfeste Anordnung ein Fahrzeugsystem 64, eine Sprech- und Datenfunkeinheit 66, eine Bedien-und Anzeigeeinheit 68 sowie ein Navigationssystem 70 umfaßt.

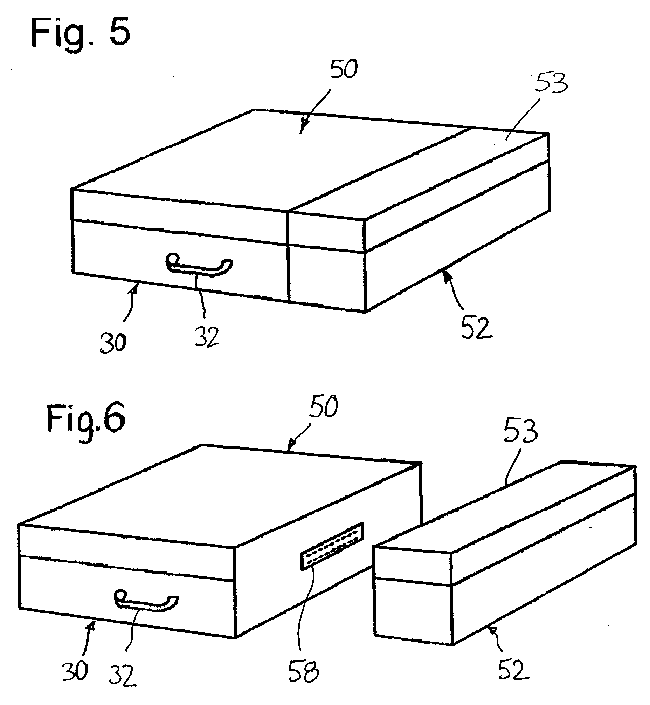

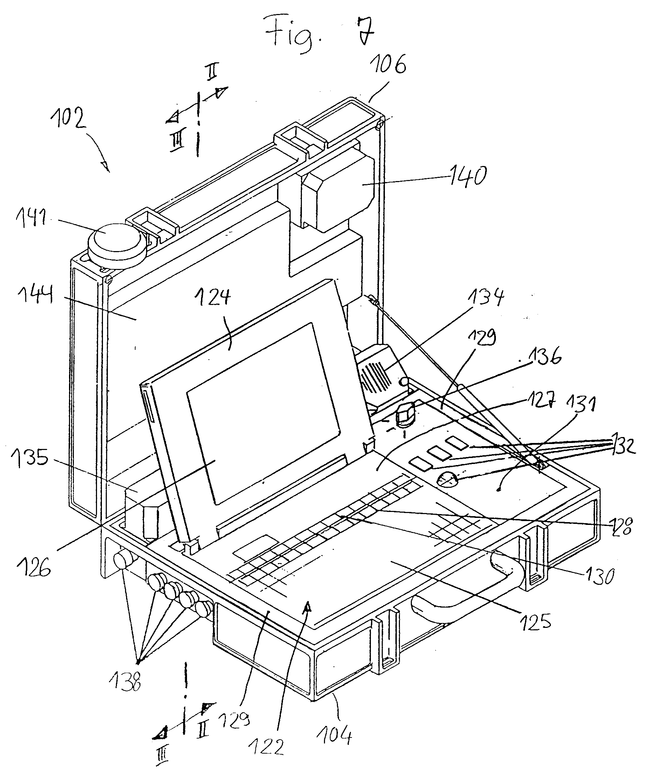

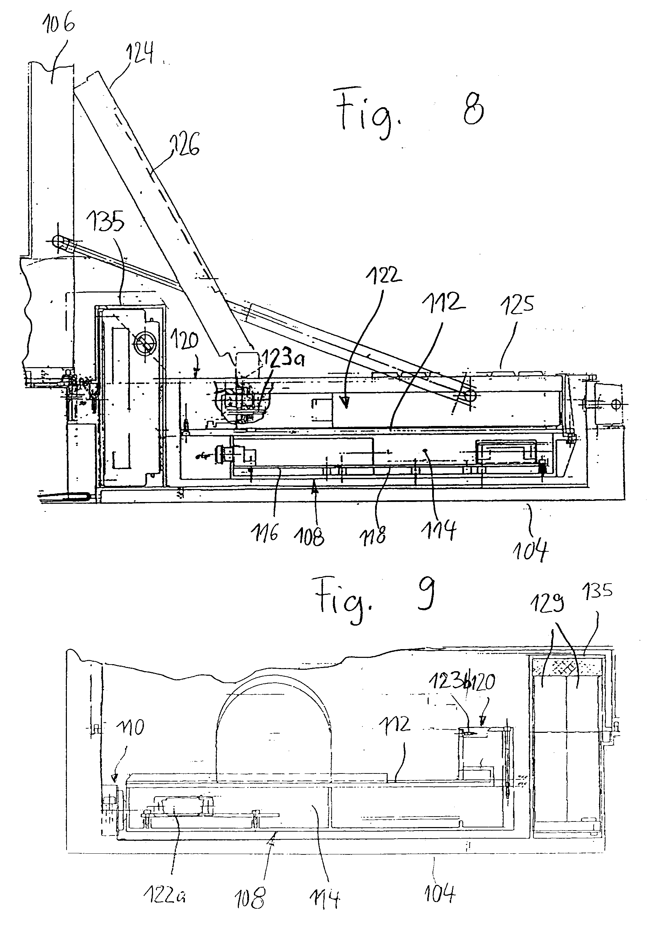

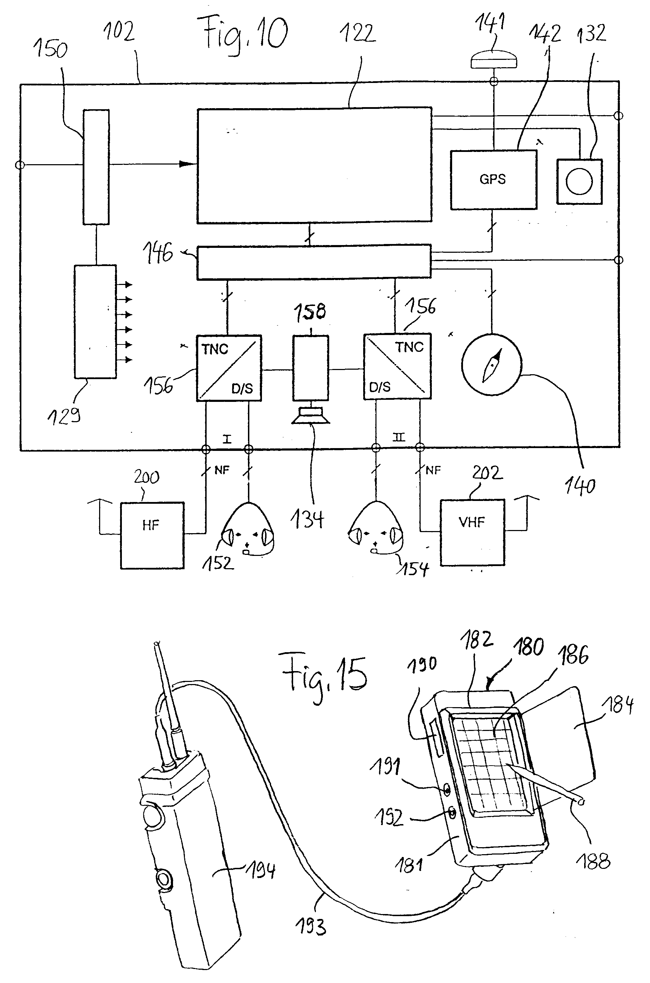

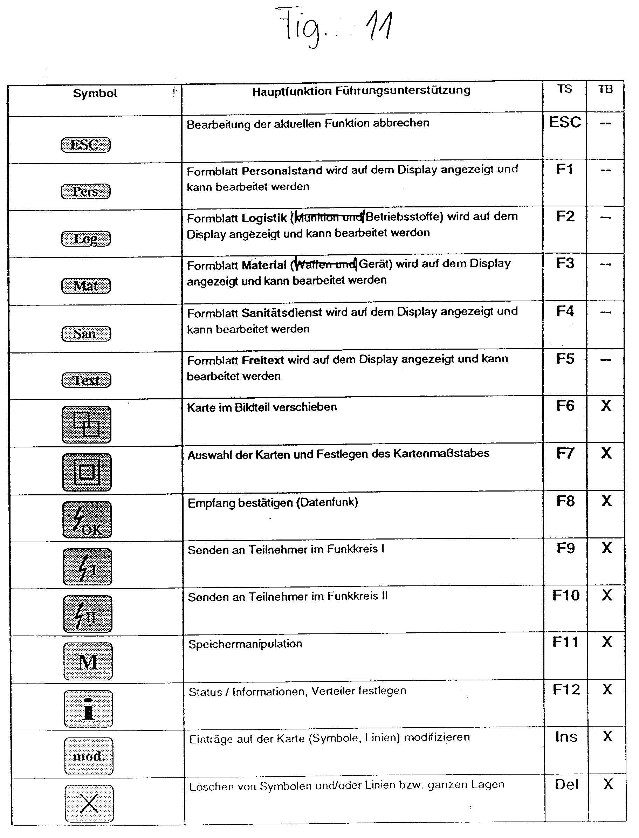

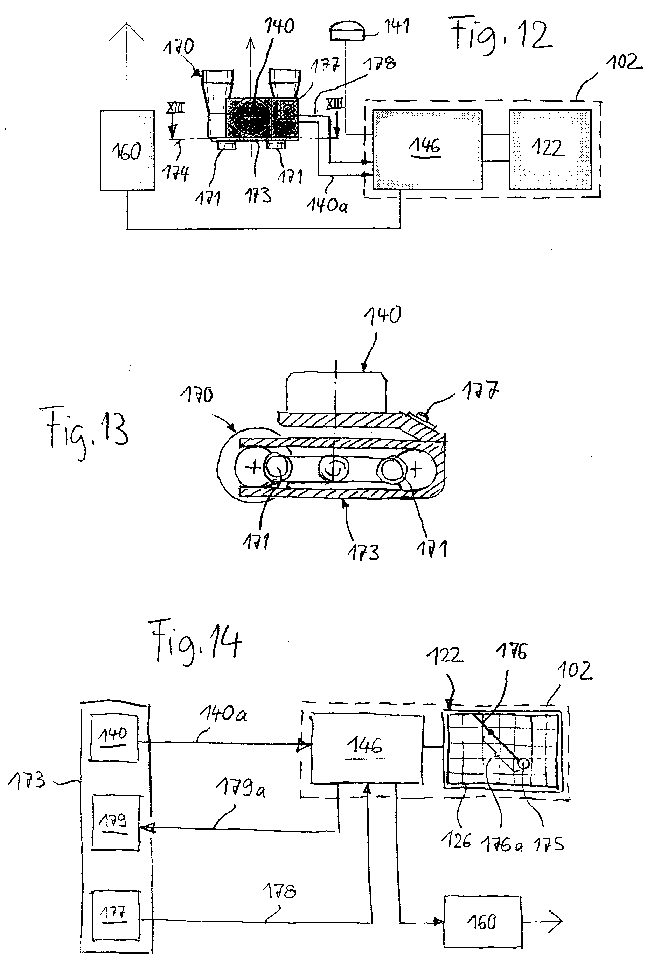

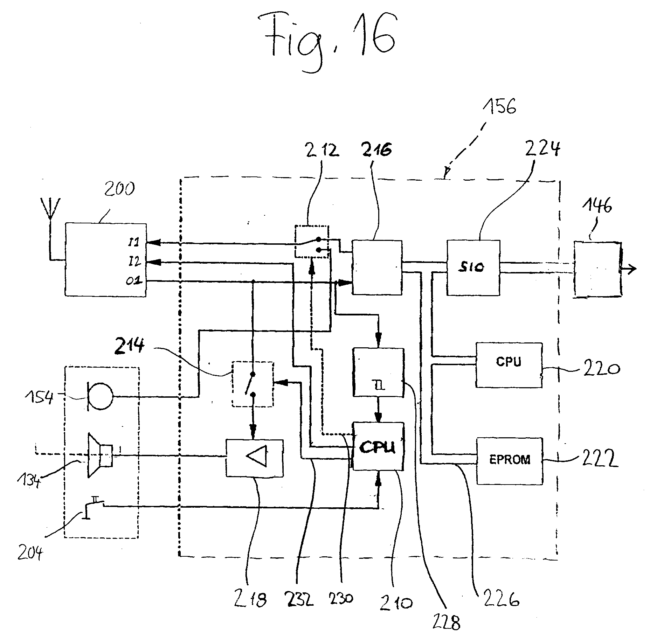

Bei der Variante nach den Figuren 5 und 6, bei denen gleiche oder gleichwirkende Teile mit gleichen Bezugszeichen wie in den Figuren 2 bis 4 bezeichnet sind, ist der Gehäuseabschnitt 52 mit dem abgeteilten Raum 54 enthaltende Komponenten wie Funkadapter, Satellitten-Navigationsgerät, digitaler Kompaß etc. am verbleibenden Gehäuseteil mit Unterschale 30 und Deckelschale 50 über eine elektrisch-mechanische Steckverbindung 58 ankoppelbar. Somit ist der hier mit einem eigenen Deckelteil 53 und eigenem Griff (nicht gezeigt) versehene Gehäuseabschnitt 52 bei Bedarf getrennt von dem übrigen Gehäuseteil handhabbar und durch einfaches Anstecken und Sichern wieder zu einer mechanischen und funktionellen Einheit mit dem Gerät zusammenfügbar.

Aus den Fig. 7 bis 9 sind die wesentlichen Bestandteile eines weiteren, von einer Person bequem tragbaren elektronischen Gerätes zur Führungsunterstützung gemäß der Erfindung erkennbar. In einem insgesamt mit der Bezugszahl 102 bezeichneten Außengehäuse mit Unterteil 104 und Deckel 106 aus einer Aluminiumlegierung ist ein am besten aus den Fig. 8 und 9 erkennbares Innengehäuse 108 aus einer chromatierten Aluminiumlegierung über Schockdämpfer 110 (Fig. 9) aufgehängt. Das Innengehäuse 108 weist einen oben durch einen Deckel 112 abgedeckten Innenraum 114 auf, in welchem elektronische Baugruppen des Gerätes untergebracht sind, die zumindest teilweise auf Leiterplatten 116, 118 angeordnet sein können und im folgenden noch anhand der Fig. 10 beschrieben sind. Aufgrund der Chromatierung des Innengehäuses 108, der Abdichtung des Deckels 112 und der schockdämpfenden Aufhängung ist der Innenraum 114 gegen das Eindringen von schädlichen Einflüssen, wie Feuchtigkeit, Staub, elektromagnetischer Strahlung aller Art und Vibrationen geschützt. Dies gilt auch für eine Andock-Konsole 120, welche einen weiteren Teil des Innengehäuses 108 bildet und in Fig. 8 auf dem linken Ende des Innengehäuses 108 und in Fig. 9 auf dessen rechten Ende zu erkennen ist.

Die Andock-Konsole 120 dient zum mechanischen und elektrischen Verbinden eines handelsüblichen Laptop- oder Notebook-Rechners 122, für den der Deckel 112 des Innengehäuses 108 eine Aufstandsfläche bildet. Der Rechner 122 ist gemäß Fig. 8 seitlich mittels rechnerseitigen Konsolensteckern 123a fest in die Andock-Konsole 120 eingesteckt, während die Verbindung mit dem Schnittstellenadapter 146 gemäß Fig. 10 über Stecker 123b an der oberen Kante der Andock-Konsole 120 erfolgt.

In Fig. 7 und 8 ist der Rechner 122 aufgeklappt dargestellt, wobei auf der Innenseite des Rechnerdeckels 124 in Fig. 7 ein farbiger LCD-Bildschirm 126 sichtbar wird. Der Rechner 122 hat eine Bedienoberfläche mit einem Tastenfeld 125, dessen oberste Reihe 128 von insgesamt fünfzehn Funktionstasten gebildet wird. Dieses Tastenfeld ist mittels einer transparenten Auflegefolie gegen Staub geschützt. In einer entsprechend gerasterten, darüber auf der Rechnerkonsole 127 angeordneten Reihe 130 sind die Funktionstasten der Reihe 128 mit Kennzeichnungen versehen, welche Symbole für Führungs-Unterstützungsfunktionen, wie in der linken Spalte der Fig. 6 dargestellt, enthalten.

Mit 129 ist eine umlaufende Staubdichtung aus Schaumstoff bezeichnet. In einem Kasten 135 hinter Rechner 122 und Andock-Konsole 120 sind zwei Akkumulatoren 129 untergebracht.

Mit Bezugszahl 132 sind ein Rollball und weitere Funktionstasten für die Bedienung des Rechners 122 und mit 136 ein dreistufiger Schalter für die Kanalwahl für Sprechfunk bezeichnet. Diese Bedienteile sind außen auf einer Klappe 131 angeordnet, die hinter dem Schalter 136 und vor einem Lautsprecher 134 nach oben klappbar angelenkt ist und vorbei am Tastenfeld 125 bis zur vorderen Innenkante des Außengehäuses 102 zur Abdeckung eines Raumes neben der in Fig. 7 hinteren Seitenkante des Rechners reicht, über den eine Diskette in einen seitlichen Disketten-Einsteckschlitz 122a (Fig. 9) des Rechners 122 einsteckbar ist.

Die für die Führung erforderliche Software, die z.B. in dem Aufsatz "IFIS, ein überzeugendes Konzept" von S. Birkeneder, W. Hedwig und K.-H. Wiemer in der Zeitschrift "Wehrtechnik", Heft 8, 1993, S. 1-7, beschrieben ist, ist auf Festplatte im Rechner 122 gespeichert.

Vom Außengehäuse 102 her zugänglich sind Anschlußstecker 138 für die Stromversorgung, für externe Anschlüsse von einer parallelen Schnittstelle und einer Schnittstelle RS 232, Anschlüsse für VHF- und HF-Funk sowie zwei Anschlüsse für Kopfhörer und Mikrophone bezeichnet. Diese Baugruppen und ihre Zusammenschaltung sind in Fig. 10 gezeigt und anhand dieser Figur nachfolgend beschrieben.

Am Deckel 106 des Außengehäuses 102 ist über eine Steckverbindung ein digitaler Kompaß 140 angeschlosssen, der wegnehmbar, jedoch über Kabel (nicht gezeigt) mit dem Gerät in Verbindung bleibend an ein hier nicht dargestelltes Sichtgerät, wie ein Fernglas, ansteckbar ausgebildet ist. Außen am Gehäuse ist die ansteckbare Antenne 141 des Empfangsteils 142 eines Satelliten-Navigationssystems (GPS) angeordnet. Im Deckel 106 ist eine von außen zugängliche Zubehörtasche 144 aufgenommen.

Aus Fig. 10 ist die Zusammenschaltung der beschriebenen Teile ersichtlich. Dabei sind mit Bezugszahl 146 eine Schnittstellenadapter, mit Bezugszahl 129 Akkumulatoren zur autonomen Stromversorgung, mit Bezugszahl 150 eine Versorgungssteuerung, mit Bezugszahlen 152, 154 Mikrophon-Kopfhörer-Kombinationen zum Empfangen und Senden von HF- bzw. VHF-Funk über Funkgeräte 200, 202, mit Bezugszahl 156 zwei Terminal-Node-Controller und mit Bezugszahl 158 ein dem Lautsprecher 134 vorgeschalteter Bordsprech-Verteiler bezeichnet. Die elektronischen Baugruppen 150, 146, 142, 156 und 158 sind sämtlich im Innenraum 114 des Innengehäuses 108 gegen störende und schädliche Einflüsse wie elektromagnetische Strahlung, Feuchtigkeit, Staub und Vibrationen geschützt untergebracht.

In den Fig. 12 und 13 ist eine weitere Ausgestaltung der Erfindung dargestellt. Dabei ist ein Außengehäuse nach der Erfindung wie in den Fig. 7 bis 10 insgesamt mit der Bezugszahl 102 bezeichnet, und die Bezugszahlen 122 und 146 bezeichnen wie dort einen herausnehmbaren, tragbaren Rechner sowie einen Schnittstellen-Adapter. Die Bezugszahlen 140 und 141 bezeichnen auch hier den elektronischen Kompaß und die ansteckbare GPS-Antenne. Der elektronische Kompaß 140 ist bei aus dem Gehäuse 102 herausgenommenem Zustand mit diesem über das Kabel 140a elektrisch verbunden und gemäß Fig. 12 mittels einer Steckvorrichtung 173 auf ein Doppelfernglas 170 mit Okularen 171 aufgeschoben, wobei die Fläche 174 als Anschlag zum Ausrichten des Kompasses 140 auf die Achse Z des Doppelfernglases 170 dient. Bezugszahl 160 bezeichnet ein Sprechfunkgerät zur Kommunikation mit gleichartigen Geräten anderer Personen des Verbandes.

Es werden nun anhand des Blockschaltbildes nach Fig. 14 die Funktion der Ausgestaltung gemäß den Fig. 12 und 13 beschrieben.

Das Azimutsignal des elektronischen Kompasses 140 wird über die Schnittstelle 146 mit Hilfe des Kabels 140a dem Schnittstellenadapter 146 und von dort dem Rechner 122 zugeführt. In der Grundbetriebsart wird von dem Bildschirm 126 des Gerätes auf einer Digitalkarte mit darin eingezeichneter Eigenposition 175 die vom elektronischen Kompaß 140 ausgegebene Richtung gegen Nord in Form einer Visierlinie 176 dargestellt. Die hierfür notwendigen technischen Vorrichtungen in Form von Hard- und Software sind in der EP-A-567 660 beschrieben. Da der elektronische Kompaß 140 mit dem Doppelfernglas 170 über das Kabel 140a verbunden ist, wird beispielsweise beim Absuchen des Horizonts mit dem Doppelfernglas auf dem Bildschirm ständig die Sichtrichtung des Doppelfernglases 170, also diejenige des Beobachters dargestellt.

Auf der Steckvorrichtung 173 ist ein Schalter 177 angebracht, welcher über ein weiteres Kabel 178 mit dem Rechner 122 verbunden ist. Bei Betätigung des Schalters 177 wird die Visierlinie 176 auf dem Bildschirm 126 "eingefroren", d.h. sie folgt dann nicht mehr den Bewegungen des Doppelfernglases 170 und des Kompasses 140, sondern zeigt die bei Betätigen des Schalters 177 innegehabte Richtung bis auf weiteres an. Der Benutzer des Doppelfernglases hat den Schalter 177 z.B. betätigt, weil er in diesem Augenblick ein interessantes Objekt entdeckt hat, dessen Richtung er auf seiner elektronischen Karte bezüglich seine Eigenposition 175 nunmehr anhand der "eingefrorenen" Visierlinie 176 finden kann. Diese Funktion sei als "Visierübergabe" VÜ bezeichnet.

Ist in dem Fernglas integriert oder davon separat ein Entfernungsmeßgerät vorgesehen, so lassen sich die erfaßten Entfernungsdaten unmittelbar auf die Visierlinie 176 übertragen, so daß auf dem Bildschirm 126 zusätzlich zur Richtung auch die Entfernung des Objektes in Form einer Strecke 176a auf der Visierlinie 176 abgelesen werden kann.

Zusätzlich läßt sich mit der Ausgestaltung nach den Figuren 12 bis 14 die weitere Funktion der "Visierzuweisung" ausführen. Hierzu ist die in Fig. 14 vereinfacht als Kasten dargestellte Steckvorrichtung 173, mittels welcher der elektronische Kompaß 140 mit dem Doppelfernglas 170 verbunden ist, mit einer Visierzuweisungsanzeige 179 ausgerüstet und über ein Kabel 179a mit dem Rechner 122 verbunden, welche durch ein akustisches oder optisches Signal dem Benutzer anzeigt, daß er das Doppelfernglas 170 in diejenige Richtung gegen Norden gerichtet hat, welche mit einer im Gerät (Rechner 122) vorgewählten Visierrichtung übereinstimmt. Diese Richtungsvorwahl erfolgt mit den in der EP-A-567 660 beschriebenen Mitteln. Der Vorteil der Visierzuweisung besteht darin, daß auf der Karte (Bildschirm 126) vorab festgelegt werden kann, in welche Richtung mit dem Doppelfernglas 170 geschaut werden muß, um dort vermutete interessante Objekte zu beobachten.

Die Visierzuweisungsanzeige 179 und der Schalter 177 zur Visierübergabebetätigung müssen nicht notwendig mit der Steckvorrichtung 173 verbunden sein. Die Anzeige 179 kann z.B. Teil des Gerätes bilden, wobei für ein akustisches Anzeigesignal z.B. der in dem Gerät integrierte Lautsprecher 158 (Fig. 10) benutzt werden kann. Ebenso kann der Schalter 177 Bestandteil des Gerätes bilden; die Betätigung erfolgt in diesem Fall vorteilhaft durch eine andere Person als den Fernglasbenutzer, z.B. auf dessen Zuruf.

Anstatt einer auf das Doppelfernglas 170 aufschiebbaren Steckvorrichtung 173 mit den oben beschriebenen zusätzlichen Einrichtungen könnte auch eine mit dem Doppelfernglas fest verbundene Vorrichtung zur Halterung der Teile 140, 177, 179 vorgesehen sein.

In Fig. 15 ist eine besonders einfache Ausführung der Erfindung dargestellt. Hierbei ist auf die Andockstation 181 enthaltend die elektronischen Baugruppen des insgesamt mit der Bezugszahl 180 bezeichneten Gerätes ein sogenannter Note-Pad-Rechner 182 mittels einer Schnappverbindung wegnehmbar aufgeklemmt und in diesem Zustand elektrisch mit der Andockstation 181 verbunden. Der Rechner 182 hat einen durch einen Deckel 184 abgedeckten Bildschirm, auf dem beispielsweise eine Kartendarstellung wie im Bildschirm 126 gemäß Fig. 14 aufgerufen werden kann und in dem mittels eines elektronischen Schreibstiftes 188 Daten einschreibbar sind.

Mit 190 ist ein Eingabeschlitz für eine Datenkassette bezeichnet. 191 ist eine Anschlußbuchse für die ansteckbare Antenne eines Satelliten-Navigationssystems und 192 eine Anschlußbuchse für ein Kabel eines elektronischen Kompasses. Mit 194 ist ein Sprechfunkgerät bezeichnet, das mit dem die Steuerelektronik und Schnittstellenadapter enthaltenden Grundgehäuse 181 des Gerätes 180 über das Kabel 193 verbunden ist. Über das Sprechfunkgerät 194 ist ein Kontakt zu gleichartigen oder übergeordneten Geräten, wie ein Gerät nach den Figuren 7 bis 9, herstellbar.

Ergänzt man in Fig. 15 ein Doppelfernglas mit aufgestecktem elektronischen Kompaß, so kann mit dem Gerät nach Fig. 15 in gleicher Weise gearbeitet werden, wie anhand der Fig. 14 beschrieben, und das Schema nach Fig. 12 ist bei Ersatz der Bezugszahlen 122 und 160 durch die Bezugszahlen 182 und 194 auch auf die Fig. 15 lesbar.

Fig. 16 zeigt ein Schaltbild eines in dem Schaltschema von Fig. 10 verwendeten Terminal-Node-Controllers (TNC) 156. Der TNC 156 dient zur Übertragung von Daten zwischen Peripheriegeräten und dem Rechner und zur Übertragung von Sprache zwischen Peripheriegeräten, wie einem Funkgerät, und einem Sprechgeschirr und zur Umschaltung zwischen Datensignalen und Sprachsignalen.

In Fig. 16 ist der TNC 156 mit der zum Rechner 22 führenden Schnittstelle 146, dem Funkgerät 200, dem Mikrofon 154, dem Lautsprecher 134 und einem PTT (push-to-talk)-Tastschalter 204 verbunden. Der TNC 156 umfaßt einen Mikroprozessor 210 zum Erkennen von Sprachsignalen und Datensignalen, einen ersten Schalter 212, einen zweiten Schalter 214, einen Niederfrequenz-Verstärker 218, ein Modem 216, einen Mikrocontroller 220, einen Speicher 222 und einen seriellen Ein-/Ausgabebaustein (SIO) 224. Das Modem 216 ist über einen bidirektionalen Bus 226 mit dem Mikrocontroller 220, dem Speicher 222, beim gezeigten Ausführungsbeispiel ein EPROM, und über den SIO 224 mit der Schnittstelle 146 verbunden, welche beispielsweise eine serielle RS 232-Standardschnittstelle oder eine V 24-Schnittstelle sein kann. Ein Ausgang O1 des Funkgerätes 200 ist einerseits direkt mit dem Modem 216 und über einen Begrenzer-Verstärker-Baustein 228 mit dem Mikroprozessor 210 verbunden, andererseits ist er über den zweiten Schalter 214 und den Verstärker 218 mit dem Lautsprecher 234 verbunden. Ein Eingang I1 des Funkgerätes 200 ist über den ersten Schalter 212 wahlweise mit dem Modem 216 oder mit dem Mikrofon 154 verbindbar. Ferner ist der PTT-Tastschalter 204 mit dem Mikroprozessor 210 verbunden, wobei ein Ausgang des Mikroprozessors zu einem weiteren Eingang I2 des Funkgerätes 200 führt. Der erste Schalter 212 und der zweite Schalter 214 sind jeweils über eine Steuerleitung 230 bzw. 232 mit dem Mikroprozessor 210 verbunden.

Der Betrieb des TNC 256 ist wie folgt.

Zum Senden von Sprache drückt ein Benutzer des Gerätes den PTT (push-to-talk)-Tastschalter 204, um ein Steuersignal an den Mikroprozessor 210 auszugeben, welches dem Mikroprozessor anzeigt, das Sprache übertragen werden soll. Dieser gibt über die Steuerleitung 230 ein Umschaltsignal [Daten → Sprache] an den ersten Schalter 212 aus, damit dieser das Mikrofon 154 mit dem Eingang I1 des Funkgerätes 200 verbindet. Zusätzlich wird vom Mikroprozessor 210 an den Eingang I2 des Funkgerätes 200 ein Steuersignal ausgegeben, um den Sprachsender des Funkgerätes 200 einzuschalten. Solange der PTT-Tastschalter 204 gedrückt ist, bleibt das Mikrofon 154 über den ersten Schalter 212 mit dem Funkgerät 200 verbunden, und Sprachsignale können vom Mikrofon übertragen werden. Sobald der Benutzer des Gerätes den Tastschalter 204 losläßt, geht der erste Schalter 212, gesteuert durch den Mikroprozessor 210, in die in Fig. 16 gezeigte Stellung zurück und unterbricht die Verbindung von Mikrofon 154 und Funkgerät 200, so daß keine Sprachsignale mehr übertragen werden können.

Das Senden von Daten ist immer dann möglich, wenn keine Sprac hsignale übertragen werden sollen, d.h. wenn der PTT-Tastschalter 204 nicht gedrückt ist und der Mikroprozessor 210 über die Steuerleitung 230 kein Umschaltsignal an den ersten Schalter 212 ausgibt. In diesem Fall ist das Modem 216 mit dem Eingang I1 des Funkgerätes 200 verbunden, und der Sender des Funkgerätes 200 ist zum Übertragen von Datensignalen eingestellt.

Im Speicher 222 ist ein HDLC-Übertragungsprotokoll oder ein anderes geeignetes Steuerungsverfahren zur Datenübertragung gespeichert, welches die Datensicherheit, d.h. die Vollständigkeit und Richtigkeit der Daten der zu übertragenden Information gewährleistet. Der Mikrocontroller 220 steuert die Weitergabe der Information vom Rechner 22 über die Schnittstelle 146 und den SIO 224 zum Modem 216 und zum Funkgerät 200 bzw. vom Funkgerät 200 über das Modem 216 den SIO 224 und die Schnittstelle 146 zum Rechner 22. Durch einen CRC-Code wird auch bei verrauschten Funkkanälen eine gesicherte Datenübertragung ermöglicht, welche durch eine Mehrfachübertragung der Datenpakete bis zur Quittung durch die Gegenstation gewährleistet wird. Es können jedoch auch andere Prüfverfahren zur Kontrolle der eingeschriebenen Informationen eingesetzt werden.

Die zu sendenden Daten werden im Modem 216 derart moduliert, daß sie über den NF-Kanal des Funkgerätes 200 übertragbar sind. Zur Wiedergabe der Logikzustände "1" und "0" für die einzelnen Bits wird zwischen zwei Frequenzen umgeschaltet, beispielsweise 1200 Hz für "0" und 2200 Hz für "1". Die so modulierten Datenströme oder Datenpakete können solange an das Funkgerät 200 ausgegeben werden, bis der Benutzer des Gerätes die Datenübertragung über den PTT-Tastschalter 204 unterbricht und der erste Schalter 212 umgeschaltet wird, um Sprachsignale zu übertragen.

Beim Empfang von Sprachsignalen oder Datensignalen muß der TNC 156 zunächst erkennen, um welche Signalart es sich handelt.

Dazu wird das empfangene Signal über den Begrenzer-Verstärker 228 dem Mikroprozessor 210 zugeführt, welcher das empfangene Signal analysiert.

Wenn es sich um ein Sprachsignal handelt, ist dies an einer unregelmäßigen Abfolge unterschiedlichster Signalfrequenzen erkennbar. In diesem Fall gibt der Mikroprozessor 210 über die Steuerleitung 232 ein Steuersignal an den zweiten Schalter 214 aus, so daß der Schalter geschlossen wird und eine Verbindung zwischen dem Ausgang O1 des Funkgerätes und dem Lautsprecher 134 über den NF-Verstärker 218 hergestellt ist. Die empfangene Sprache kann dann über den Lautsprecher 134 wiedergegeben werden.

Wenn das Funkgerät 200 dagegen ein Signal empfängt und an den Mikroprozessor 210 weitergibt, welches während einer bestimmten Dauer nur die definierte Frequenz für logisch "0", beispielsweise 1200 Hz, oder für logisch "1", beispielsweise 2200 Hz, oder eine regelmäßig wechselnde Abfolge dieser beiden Frequenzen aufweist, erkennt der Mikroprozessor, daß ein Datensignal empfangen wurde und gibt ein Austast-Steuersignal über die Steuerleitung 232 an den zweiten Schalter 214 aus, um diesen Schalter zu öffnen und die Verbindung zwischen dem Funkgerät 200 und dem Lautsprecher 134 zu unterbrechen. Der Ausgang O1 des Funkgerätes 200 ist dann nur noch direkt mit dem Modem 216 zum Empfangen von Datensignalen verbunden.

Die Unterbrechung der Verbindung zwischen Funkgerät und Lautsprecher beim Empfang von Datensignalen ist deshalb besonders zweckmäßig, weil die empfangenen Daten-Frequenzen für "0" und "1" in ihrer Lautstärkenamplitude mit Sprachsignalen identisch sind, was beim Verstärken und Ausgeben dieser Signale über den Lautsprecher 134 für den Benutzer des Gerätes sehr unangenehm wäre. Deshalb wurde der TNC 156, wie beschrieben, so ausgestaltet, daß auf der Empfängerseite die störenden Töne des Datenfunks automatisch ausgetastet werden. Spezielle Algorithmen überwachen die Regelmäßigkeit der aufeinanderfolgenden Frequenzen, so daß Sprachsilben in diesem Frequenzbereich nicht ausgetastet werden.

Da bei einer Datenrate von 1200 Bit/sec und einer unteren Modulationsfrequenz von beispielsweise 1200 Hz bei bestimmten Datenpaketen nur eine Signalperiode für die Auswertung jeweils eines Bits des Datenpaketes zur Verfügung steht, kann die Tonauswertung für solche Fälle nicht mit herkömmlichen einfachen Mitteln durchgeführt werden, sondern sie erfolgt mithilfe eines Mikroprozessors. Hat der Mikroprozessor 210 bei einer bestimmten Anzahl aufeinanderfolgender Perioden erkannt, daß nur die den Datensignalen entsprechenden Frequenzen empfangen werden, dann werden diese Frequenzen ausgetastet, d.h. die Tonsignale werden nicht über den Lautsprecher 134 ausgegeben sondern nur zum Modem 216 übertragen. Das Modem 216 demoduliert die empfangenen Frequenzen und gibt die empfangene Information über den bidirektionalen Bus 226 an den Mikrocontroller 220 zur Auswertung und weiteren Übertragung zur Schnittstelle 146 und zum Rechner 22 weiter.

Da der Sprechfunk immer Priorität vor der Übertragung von Daten haben muß, wird nach den oben beschriebenen Kriterien unter Verwendung spezieller Algorithmen sichergestellt, daß das Empfangen und Senden von Daten über das Funkgerät nur möglich ist, wenn der Funkkanal nicht durch Sprachsignale belegt ist.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Tragbares elektronisches Gerät zur Orientierung und Kommunikation mit einem Gehäuse, welches die folgenden Komponenten enthält:
- einen programmierbaren Rechner (8;38;122;182) mit mindestens einer parallelen oder seriellen Schnittstelle,
- Schnittstellen zu Kommunikationseinrichtungen zur Kommunikation mit gleichen oder ähnlichen Geräten,
- Schnittstellen zu Orientierungssensoren,
- elektronische Baugruppen zur Steuerung und zum Betrieb,
- eine Andockstation (6;36;120) zur elektrischen Verbindung des Rechners (8;38;122) mit den elektronischen Baugruppen und den Schnittstellen und zur mechanischen Halterung, wobei mindestens die elektronischen Baugruppen geschützt gegen äußere Einflüsse in dem Gehäuse (32;102;180) untergebracht sind.

2. Gerät nach Anspruch 1, dadurch **gekennzeichnet**, daß der Rechner in oder an dem Gehäuse angeordnet und davon abtrennbar zum Betrieb unabhängig von dem Gerät ausgebildet ist.

3. Gerät nach Anspruch 1, dadurch **gekennzeichnet**, daß der Rechner eine fest im Gehäuse installierte Rechnerplatine aufweist.

4. Gerät nach einem der Ansprüche 1 bis 3, , **dadurch gekennzeichnet,** daß es einen gesonderten Bedien- und Anzeigemodul (14; 40) aufweist, der permanent dem Gehäuse (2; 30) zugeordnet ist und über die Andockstation (6; 36) mit dem Rechner (8; 38) kommunizieren kann.

5. Gerät nach einem der Ansprüche 1 bis 4, **dadurch gekennzeichnet**, daß der Rechner (8; 38) eine eigene Bedien- und Anzeigeoberfläche aufweist.

6. Gerät nach Anspruch 5, **dadurch gekennzeichnet**, daß in der Anzeigeoberfläche Daten mit einem elektronischen Schreibstift einschreibbar sind.

7. Gerät nach einem der Ansprüche 1 bis 6, **dadurch gekennzeichnet,** daß die Bedienoberfläche des Rechners (126) ein Tastenfeld (125) enthaltend Funktionstasten (128) mit besonders gekennzeichneten Hauptfunktionen zur Führungsunterstützung aufweist.

8. Gerät nach einem der Ansprüche 1 bis 7, **dadurch gekennzeichnet,** daß ein Innengehäuse (108) vorgesehen ist, welches einen abgeschlossenen, gegen äußere Einflüsse wie elektromagnetische Strahlung, Staub und Vibrationen geschützten Innenraum (114) zur Aufnahme der elektronischen Baugruppen sowie die Andockstation (120) aufnimmt, über welche der Rechner (122) mit den elektronischen Baugruppen verbunden ist.

9. Gerät nach Anspruch 8, **dadurch gekennzeichnet**, daß das Innengehäuse (108) mittels Schockdämpfern (110) im Außengehäuse (102) aufgehängt ist.

10. Gerät nach einem der-Ansprüche 1 bis 9, **dadurch gekennzeichnet**, daß die Orientierungssensoren ein satellitengesteuertes Navigationsgerät (GPS) und einen digitalen Kompaß (140) umfassen.

11. Gerät nach einem der Ansprüche 1 bis 10, **dadurch gekennzeichnet,** daß die Kommunikationseinrichtungen einen Lautsprecher und Schnittstellen für die Kommunikation über Daten- und Sprachverkehr aufweisen.

12. Gerät nach einem der Ansprüche 1 bis 11, dadurch **gekennzeichnet,** daß die elektronischen Baugruppen mindestens einen Terminal-Node-Controller (TNC) zur Daten-/Sprachumschaltung umfassen.

13. Gerät nach Anspruch 12, dadurch **gekennzeichnet**, daß der Terminal-Node-Controller (156) mit Kommunikationseinrichtungen verbunden ist und einen Mikroprozessor (210) zur Erkennung von Sprachsignalen und Datensignalen aufweist, welcher einen ersten Schalter (212) steuert, um zwischen einem Sprachsendebetrieb und einem Datensendebetrieb umzuschalten, und einen zweiten Schalter (214) steuert, um beim Empfang von Datensignalen den Sprachempfangsbetrieb auszutasten.

14. Gerät nach Anspruch 12 oder 13, dadurch **gekennzeichnet,** daß der Terminal-Node-Controller (156) mit einem Funkgerät (200), einem Mikrophon (154) und einem Lautsprecher (134) und mit einer Schnittstelle (146) zur Verbindung mit dem Rechner (22) verbunden ist,
daß zum Senden von Sprache das Funkgerät (200) über den ersten Schalter (212) mit dem Mikrophon (154) verbindbar ist,
daß zum Senden von Daten das Funkgerät (200) über den ersten Schalter (212) und ein Modem (216) mit der Schnittstelle (146) verbindbar ist,
daß zum Empfangen von Sprache das Funkgerät (200) über den zweiten Schalter (214) mit dem Lautsprecher (134) verbindbar ist und
daß zum Empfangen von Daten die Verbindung zwischen dem Funkgerät (200) und dem Lautsprecher (134) über den zweiten Schalter (214) trennbar ist, so daß das Funkgerät (200) über das Modem (216) nur mit der Schnittstelle (146) verbunden ist.

15. Gerät nach einem der Ansprüche 1 bis 14, **dadurch gekennzeichnet,** daß außen am Gehäuse (102) Anschlüsse (138) für mindestens ein Funkgerät (200, 202), für Kopfhörer und Mikrophone (152, 154) sowie zum Wiederaufladen eines Akkus (129) vorgesehen sind.

16. Gerät nach einem der Ansprüche 10 bis 15, **dadurch gekennzeichnet,** daß der digitale Kompaß (140) aus dem Gehäuse (102) herausnehmbar und an einem gehäuseexternen Sichtgerät (170) mechanisch befestigbar angeordnet ist.

17. Gerät nach Anspruch 16, **dadurch gekennzeichnet,** daß das Sichtgerät (170) ein Doppelfernglas ist, auf welches der digitale Kompaß (140) mittels einer Steckvorrichtung (173) aufsteckbar ist, und daß sowohl das Sichtgerät (170) als auch der Kompaß (140) über Kabel (178, 140a) in elektrischer Verbindung mit dem Gerät stehen, so daß eine mit dem Sichtgerät erfaßte Richtung auf der Anzeigeoberfläche (126) des Rechners (122) in einer Kartendarstellung in Form einer Visierlinie (176) in korrekter Himmelsrichtung darstellbar ist.

18. Gerät nach Anspruch 17, **dadurch gekennzeichnet,** daß dem Sichtgerät (170) ein elektronisches Entfernungsmeßgerät zugeordnet ist, dessen Ausgangsdaten dem Rechner zugeführt werden, um auf der Anzeigeoberfläche die Entfernung (176a) eines anvisierten Objekts in Richtung der Visierlinie oder auf der dargestellten Visierlinie (176) abzubilden.

19. Gerät nach einem der Ansprüche 1 bis 18, **dadurch gekennzeichnet**, daß der tragbare Rechner (8; 38; 122) an eine in einem Fahrzeug fest installierte Andockstation (62) elektro-mechanisch ankuppelbar ist.

20. Gerät nach einem der Ansprüche 1 bis 19, **dadurch gekennzeichnet**, daß das Gehäuse mit einem Griff, einem Traggurt und/oder einem Anbringmittel an einem anderen tragbaren Teil ausgebildet ist.
